# EUROPÄISCHE PATENTANMELDUNG

(11) **EP 1 420 381 A1**
(43) Veröffentlichungstag der Anmeldung: **19.05.2004**
(21) Anmeldenummer: 02090376.1
(22) Anmeldetag: 12.11.2002
(51) Int. Cl.: G09F 3/02

(54) **Verfahren und Einrichtung zur Kennzeichnung und Authentizitatskontrolle von Produkten**

(71) Anmelder: Hauni Maschinenbau AG, 21033 Hamburg (DE)
(72) Erfinder: Gosebruch, Harald, Dr., 27283 Verden (DE)
(74) Vertreter: Patentanwälte Wenzel & Kalkoff

(57) **Zusammenfassung**

Die Erfindung betrifft ein Verfahren zur Kennzeichnung sowie ein Verfahren zur Identifizierung einer insbesondere mit Zigaretten befüllten Verpackung, die ein Verpackungselement zur Aufnahme des Verpackungsguts sowie eine das Verpackungselement mindestens teilweise umschließende umfaßt. Des weiteren befaßt sich die Erfindung mit einer Einrichtung zum Kennzeichnen sowie einer Einrichtung zum Identifizieren einer insbesondere mit Zigaretten befüllten Verpackung, die ein Verpackungselement zur Aufnahme des Verpackungsguts sowie eine das Verpackungselement mindestens teilweise umschließende Umhüllung umfaßt. Weiterhin betrifft die Erfindung eine Verpackung, insbesondere Zigarettenverpackung.

Bisherige Verfahren und Einrichtungen zur Kennzeichnung und Identifizierung lassen keine zuverlässige Prüfung auf Echtheit der Verpackung zu, da die bekannten Sicherheitsmaßnahmen umgangen werden können.

Mit den erfindungsgemäßen Einrichtungen und Verfahren ist durch Aufnahme einer individuellen Codierung und einer für das Verpackungselement und/oder die Umhüllung charakteristischen Eigenschaft, die bei allen aufeinanderfolgenden Produkten in zufälliger und nicht nachahmbarer Weise vorhanden ist, eine eindeutige und sichere Prüfung auf Echtheit der Verpackung mit geringem Aufwand gewährleistet. Die erfindungsgemäße Verpackung mit der zusätzlichen Rastermarke unterstützt die eindeutige Identifizierung.

## Beschreibung

Die Erfindung betrifft ein Verfahren zur Kennzeichnung sowie ein Verfahren zur Identifizierung einer insbesondere mit Zigaretten befüllten Verpackung, die ein Verpackungselement zur Aufnahme des Verpackungsguts sowie eine das Verpackungselement mindestens teilweise umschließende Umhüllung umfaßt. Des weiteren befaßt sich die Erfindung mit einer Einrichtung zum Kennzeichnen sowie einer Einrichtung zum Identifizieren einer insbesondere mit Zigaretten befüllten Verpackung, die ein Verpackungselement zur Aufnahme des Verpackungsguts sowie eine das Verpackungselement mindestens teilweise umschließende Umhüllung umfaßt. Weiterhin betrifft die Erfindung eine Verpackung, insbesondere Zigarettenverpackung.

Verpackungen im erfindungsgemäßen Sinn können Weichbecherpackungen, Hartbecherpackungen (sogenannte Hinged-Lid-Packungen), Vorratsdosen oder andere Behältnisse für Zigaretten, Zigarren, losen Tabak oder dergleichen sein. Das Verpackungselement selbst kann aus mehrere Komponenten bestehen. Um Verpackungen und insbesondere Zigarettenverpackungen zu kennzeichnen und zu identifizieren, nämlich um die Verpackung auf Echtheit bzw. Herkunft prüfen zu können, sind verschiedene Verfahren und Einrichtungen bekannt. Üblicherweise werden die Verpackungen bei der Herstellung z.B. mit einem Barcode versehen. Mittels eines Scanners oder dergleichen wird der Barcode dann zur Überprüfung gelesen, so daß die im Barcode enthaltenen Informationen einen Rückschluß auf den Hersteller, den Herstellungsort etc. zulassen.

Es sind jedoch auch andere, noch aufwendigere Möglichkeiten zur Kennzeichnung und Identifizierung bekannt, bei denen im Bereich der Verpackung Magnetstreifen oder dergleichen als Informationsträger aufgebracht sind, wobei die Magnetstreifen Informationen z.B. zum Hersteller, Herstellungsort, Datum etc. beinhalten können.

Die bekannten Verfahren und Einrichtungen zur Kennzeichnung und Identifizierung von Verpackungen sowie die entsprechenden Verpackungen selbst weisen jedoch übereinstimmend den Nachteil auf, daß sie keine eindeutige und zweifelsfreie Kennzeichnung bzw. Identifizierung der Verpackung ermöglichen. Es ist nämlich ohne weiteres mögliche, gefälschte Verpackungen in Umlauf zu bringen, deren originale Herkunft nicht belegt werden kann, da die bekannten Verfahren und Einrichtungen manipulierbar sind, indem Kennzeichnungen, wie z.B. die Barcodes, umgangen, nachgeahmt bzw. gefälscht werden können. Auch ist zur Kennzeichnung ein erheblicher Aufwand erforderlich, was insbesondere zu erhöhten Kosten bei der Herstellung der Verpackungen führt.

Es ist daher Aufgabe der vorliegenden Erfindung, eine einfach handhabbare Einrichtung sowie ein kostengünstiges Verfahren zum Kennzeichnen und eine einfach handhabbare Einrichtung sowie ein kostengünstiges Verfahren zum Identifizieren einer insbesondere mit Zigaretten befüllten Verpackung vorzuschlagen, die eine eindeutige und zuverlässige Echtheitskontrolle der Verpackung gewährleisten. Des weiteren ist es Aufgabe der Erfindung, eine Verpackung vorzuschlagen, die sich einfach und zuverlässig kennzeichnen und identifizieren läßt.

Diese Aufgabe wird durch ein Verfahren zur Kennzeichnung einer insbesondere mit Zigaretten befüllten Verpackung gelöst, das durch folgende Schritte gekennzeichnet ist:
- während des Herstellungsprozesses der Verpackung wird mindestens eine individuelle, lediglich einmal vergebene Codierung auf das Verpackungselement und/oder die Umhüllung aufgebracht und in einem Speichermedium gespeichert,
- während des Herstellungsprozesses der Verpackung wird des weiteren mindestens eine für das Verpackungselement und/oder die Umhüllung charakteristische Eigenschaft als Meßgröße erfaßt,
- die Meßgröße wird der dem Verpackungselement zugehörigen Codierung in dem Speichermedium zur Bildung eines einzigartigen Datensatzes zugeordnet.

Mit einem solchen Kennzeichnungsverfahren, nämlich dem Kennzeichnen der Verpackung mit einer festen, also unveränderlichen aber individuellen Codierung einerseits und einer herstellungsbedingten und damit bei allen aufeinanderfolgenden Verpackungen zufälligen und variablen Meßgröße des Verpackungselementes und/oder der Umhüllung selbst andererseits, läßt sich eine Verpackung durch Zuordnung der Codierung und der Meßgröße zu einem einzigartigen Datensatz für jede Verpackung eindeutig markieren, so daß sichergestellt werden kann, daß die Verpackung zweifelsfrei beim autorisierten Hersteller selbst hergestellt wurde. Die Kennzeichnung ist auch sehr einfach und damit kostengünstig, da außer einer einfachen Codierung keinerlei zusätzliche Elemente auf die Verpackung aufgebracht werden müssen. Vielmehr nutzt die Erfindung zur Kennzeichnung die Eigenarten jeder Verpackung selbst.

In einer Weiterbildung der Erfindung wird zusätzlich eine Rastermarke auf das Verpackungselement und/oder die Umhüllung aufgebracht, wodurch das Erfassen der charakteristischen Eigenschaft jeder Verpackung als Meßgröße erleichtert wird. Im übrigen kann diese Rastermarke auch eine ohnehin auf die Verpackung aufzubringende bzw. bereits vorhandene Bedruckung, wie z.B. der Markenname, ein Logo oder dergleichen sein.

Vorteilhafterweise wird die Lage und Überlappungsbreite der Verbindungsnaht der Umhüllung relativ zur Rastermarke als Meßgröße ermittelt. Durch dieses Vorgehen wird eine noch größere Sicherheit bei der Erfassung der Meßgröße erreicht.

Des weiteren wird die Aufgabe durch ein Verfahren zur Identifizierung einer insbesondere mit Zigaretten befüllten Verpackung gelöst, das durch folgende Schritte gekennzeichnet ist:
- Erfassen mindestens einer auf dem Verpackungselement und/oder der Umhüllung aufgebrachten, individuellen und lediglich einmal vergebenen Codierung,
- Erfassen mindestens einer für das Verpackungselement und/oder die Umhüllung charakteristischen Eigenschaft als Meßgröße,
- Vergleich der erfaßten Codierung und Meßgröße mit einem bei der Herstellung der Verpackung in einem Speichermedium gespeicherten, aus Codierung und Meßgröße gebildeten einzigartigen Datensatz zu jeder Verpackung.

Mit einem solchen Identifizierungsverfahren läßt sich die Echtheit der Verpackung - und damit eine Manipulation bzw. Fälschung der Verpackung - leicht und zuverlässig nachweisen, da die charakteristische Eigenschaft des Verpackungselementes und/oder der Umhüllung bei allen hergestellten Verpackungen in nicht vorhersehbarer und nicht nachahmbarer Weise vorhanden ist, so daß bereits das Öffnen der Umhüllung zu einer meßbaren Veränderung der zur Kennzeichnung verwendeten Eigenschaft führt. Beim Vergleich der zur Überprüfung aufgenommenen Codierung und Meßgröße mit dem zuvor in einer Datenbank oder dergleichen abgelegten verpackungsspezifischen einzigartigen Datensatz läßt sich einfach ermitteln, ob eine Übereinstimmung vorliegt oder nicht. Dabei kann die Meßgröße erfaßt und durch eine Abfrage der Datenbank die zugehörige Codierung ermittelt werden. Diese wird dann mit der Codierung auf der gerade geprüften Verpackung verglichen. Es besteht auch die Möglichkeit, die Codierung zu erfassen und durch eine Abfrage der Datenbank die zugehörige Meßgröße zu ermitteln, die dann mit der zu erfassenden Meßgröße der gerade geprüften Verpackung verglichen wird. Im Falle einer Übereinstimmung kann mit hoher Sicherheit von der Echtheit des Produktes ausgegangen werden.

Bevorzugt wird die Lage und Überlappungsbreite der Verbindungsnaht der Umhüllung relativ zu einer auf dem Verpackungselement und/oder der Umhüllung aufgebrachten Rastermarke als Meßgröße ermittelt. Durch die Hilfsmaßnahme wird die Sicherheit der Erfassung der Meßgröße noch erhöht, so daß die Fehlerquote bei der Prüfung auf Echtheit der Verpackung weiter gesenkt werden kann.

Die Aufgabe wird außerdem mit einer gattungsgemäßen Einrichtung zur Kennzeichnung einer insbesondere mit Zigaretten befüllten Verpackung dadurch gelöst, daß die Einrichtung Mittel zum Erfassen mindestens einer für das Verpackungselement und/oder die Umhüllung charakteristischen Eigenschaft als Meßgröße sowie ein Speichermedium zum Speichern der erfaßten Meßgröße umfaßt, wobei das Mittel und das Speichermedium über einen Personalcomputer (PC) oder dergleichen zum Zuordnen der Meßgröße zu einer im Speichermedium abgelegten, individuellen und lediglich einmal vergebenen Codierung der Verpackung miteinander verbunden sind. Mit einer solchen Einrichtung ist insbesondere das erfindungsgemäße Verfahren durchführbar. Die Einrichtung ermöglicht mit einfachen Mitteln eine Kennzeichnung jeder Verpackung, die jederzeit einen eindeutigen Nachweis der Echtheit zuläßt. Da für die Einrichtung Standardelemente verwendet werden können, die üblicherweise ohnehin an den Vorrichtungen zur Herstellung der Verpackungen vorhanden sind, ist die Einrichtung kostengünstig und zudem leicht handhabbar.

Weiterhin wird die der Erfindung zugrunde liegende Aufgabe auch durch eine gattungsgemäße Einrichtung zum Identifizieren einer insbesondere mit Zigaretten befüllten Verpackung dadurch gelöst, daß die Einrichtung Mittel zum Erfassen mindestens einer für das Verpackungselement und/oder die Umhüllung charakteristischen Eigenschaft als Meßgröße sowie ein Speichermedium zum Speichern der erfaßten Meßgröße umfaßt, wobei das Mittel und das Speichermedium über einen Personalcomputer (PC) oder dergleichen zum Vergleichen einer individuellen und lediglich einmal vergebenen Codierung und der erfaßten Meßgröße der zu identifizierenden Verpackung mit einem zuvor im Speichermedium gespeicherten, aus Codierung und Meßgröße gebildeten, einzigartigen Datensatz zu jeder Verpackung miteinander verbunden sind. Auch für diese Einrichtung sind handelsübliche Standardelemente als Mittel zum Erfassen der Codierung und der Meßgröße verwendbar. Im übrigen ist eine solche Einrichtung auch als transportable Einheit einsetzbar, was die Verwendungsmöglichkeiten noch erhöht.

Endlich wird die Aufgabe auch durch eine Verpackung der gattungsgemäßen Art dadurch gelöst, daß auf dem Verpackungselement und/oder der Umhüllung eine von außen lesbare individuelle, und lediglich einmal vergebene Codierung aufgebracht ist und zusätzlich eine Rastermarke oder dergleichen zur Erfassung einer charakteristischen Eigenschaft des Verpackungselementes und/oder der Umhüllung als Meßgröße vorgesehen ist. Mit einer solchen Verpackung wird das Erfassen einer für das Verpackungselement und/oder die Umhüllung charakteristischen Eigenschaft unterstützt, was die Sicherheit der Echtheitskontrolle noch erhöht.

Weitere bevorzugte Weiterbildungen bzw. Ausführungen der Verfahren und Einrichtungen sowie der Verpackung sind den Unteransprüchen und der Beschreibung zu entnehmen. Das Prinzip der Einrichtungen und Verfahren zur Kennzeichnung und Identifizierung sowie eine bevorzugte Verpackung werden anhand der Zeichnung näher erläutert. In der Zeichnung zeigt:
- Fig. 1: eine Zigarettenverpackung mit einer Codierung sowie einer zusätzlichen Rastermarke,
- Fig. 2: eine Vergrößerung des Ausschnitts A gemäß Figur 1, und
- Fig. 3: schematische Auszüge einer tabellarischen Datenspeicherung in einer Datenbank.

Die Verfahren und Einrichtungen dienen zum Herstellen, also insbesondere zum Kennzeichnen und zum Identifizieren von Verpackungen, um die Echtheit der Verpackungen kontrollieren zu können.

Grundsätzlich besteht jede Zigarettenverpackung 10 aus einem Verpackungselement 11 und einer Umhüllung 12. Die Umhüllung 12 besteht üblicherweise aus einer transparenten Cellophanhülle. Andere Materialien sind ebenfalls verwendbar. Innerhalb des u.U. auch mehrteiligen Verpackungselementes 11 ist das Verpackungsgut angeordnet. Die Umhüllung 12 umschließt das Verpackungselement 11 vorzugsweise vollständig und ist üblicherweise mittels eines Aufreißstreifens 13 zu öffnen. Bei der Herstellung solcher Verpackungen 10, die bekannt ist und weswegen an dieser Stelle auf eine ausführliche Beschreibung verzichtet wird, wird jede Verpackung mit einer Codierung 14 versehen. Diese Codierung 14 ist vorzugsweise als fortlaufende Zahl ausgebildet, so daß jede Codierung 14 nur ein einziges Mal vergeben wird. Jede einzelne Verpackung 10 weist damit eine individuelle Codierung 14 auf. Die Codierung 14 kann aber aus Buchstaben, Kombinationen aus Buchstaben und Zahlen oder anderen individuellen Kennzeichen bestehen. Entscheidend ist die Einmaligkeit jeder Codierung 14. Die Codierung 14 wird direkt bei der Vergabe bzw. Aufbringung auf die Verpackung vorzugsweise beim Hersteller selbst gespeichert. Hierfür eignet sich beispielsweise eine übliche Datenbank. Die Codierung 14, die auf das Verpackungselement 11 und/oder die Umhüllung 12 gedruckt, geprägt, gestanzt oder anderweitig aufgebracht werden kann, kann aber auch erst nach dem Aufbringen durch zusätzliche Mittel erfaßt und dem Speichermedium, nämlich der Datenbank zugeführt werden. Die Codierung 14 kann zusätzlich oder alternativ zu der individuellen Kennzeichnung jeder Verpackung 10 auch Informationen über die Verpackung 10 selbst enthalten, wie z.B. Datum, Zeit, Ort, Maschine etc. enthalten und ist so an der Verpackung 10 angeordnet, daß sie von außen lesbar ist.

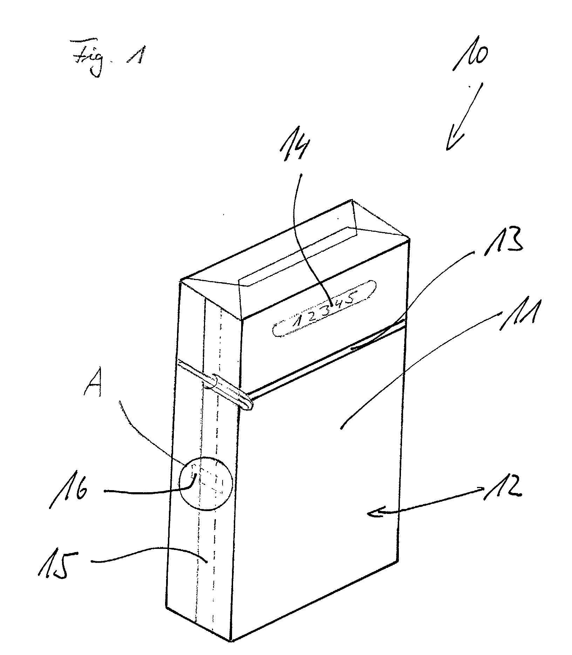

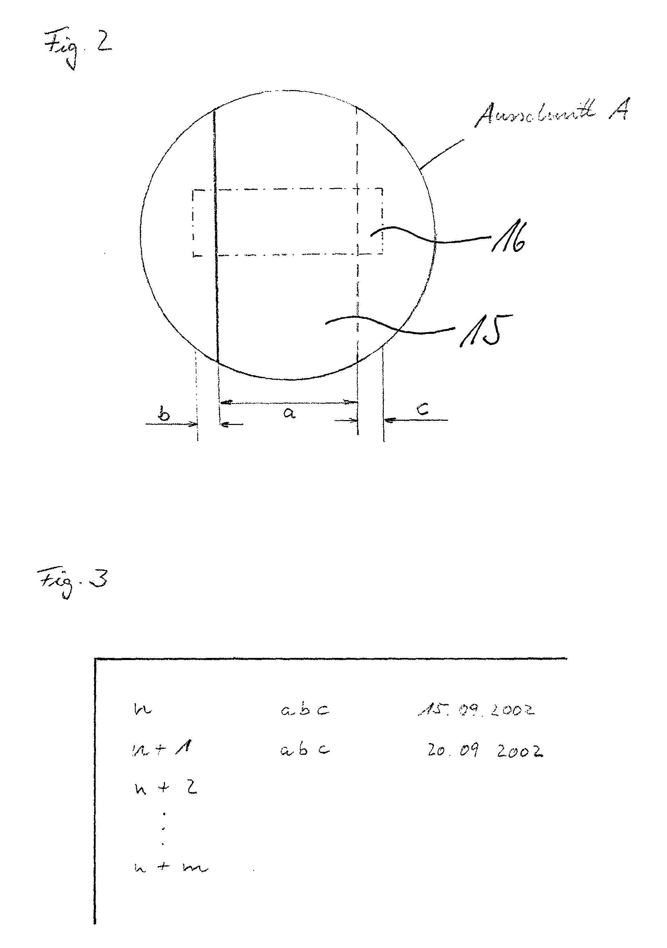

Des weiteren wird während des Herstellungsprozesses der Verpackung 10, vorzugsweise am Ende des Herstellungsprozesses, eine für das Verpackungselement 11 und/oder die Umhüllung 12 charakteristische Eigenschaft als Meßgröße erfaßt. Diese variable und nicht vorhersehbare Meßgröße wird der dem Verpackungselement 11 und/oder der Umhüllung 12 zugehörigen Codierung 14 in dem Speichermedium zur Bildung eines einzigartigen Datensatzes zugeordnet. Dieser Datensatz kann durch weitere Informationen, wie z.B. Datum (siehe Figur 3) beliebig ergänzt werden. Die einzelnen Vorrichtungs-Komponenten, die zur Herstellung der Verpackung erforderlich sind, sind ebenfalls mit der Datenbank vernetzt, so daß die gewünschten Informationen direkt gespeichert bzw. ausgelesen werden können.

Als besonders geeignete Meßgröße wird die Lage und Überlappungsbreite der Verbindungsnaht 15 der Umhüllung 12 ermittelt. Als Referenzmeßpunkte bzw. Bezugspunkte können ohnehin auf der Verpackung 10 befindliche Zeichen, Logos, Schriftzüge oder dergleichen oder auch körperliche Merkmale, wie z.B. Kanten des Verpackungselementes 11, verwendet werden. Alternativ oder ergänzend können auch andere charakteristische Meßgrößen, wie z.B. die Spaltbreite zwischen Deckel und Behälter einer Hartbecherschachtel, der Versatz von sich überlappenden Teilen des Verpackungselementes 11 oder das Wellenmuster der Verbindungsnaht erfaßt werden. Für den Fall, daß die Umhüllung 12 einen Aufreißstreifen 13 aufweist, kann die Geometrie und/oder die Lage des Aufreißstreifens 13 ebenfalls als charakteristische Eigenschaft erfaßt werden.

Um das Erfassen der Meßgröße zu unterstützen bzw. definierte Bezugspunkte zu bilden, wird zusätzlich eine Rastermarke 16 zweckmäßigerweise auf das Verpackungselement 11 aufgebracht. Die Rastermarke 15 ist fest mit dem Verpackungselement 11 verbunden und so angeordnet, daß sie von außen lesbar bzw. erkennbar ist. Alternativ kann die Rastermarke 16 auch an der Umhüllung 12 befestigt oder sogar ein Bestandteil der Verpackung 10 selbst bzw. ein Aufdruck auf der Verpackung 10 sein. Die Rastermarke 16 ist in der gezeigten Ausführungsform im Bereich der Verbindungsnaht 15 bzw. unmittelbar unterhalb der Verbindungsnaht 15 angeordnet, wobei die Rastermarke 16 zu beiden Seiten über die Verbindungsnaht 15 mit einem bestimmten Betrag b bzw. c übersteht. Beim Erfassen der Meßgröße werden die Überstände b und c sowie die Breite der Überlappung a ermittelt und zur Bildung der charakteristischen Meßgröße bzw. Kennzahl zusammengefügt. Da es bei dieser Messung auf exakte Meßergebnisse ankommt, ist die Rastermarke 16 vorzugsweise mit der Umhüllung 12, z.B. durch Kleben, durch Siegeln oder dergleichen, fest verbunden, um eine relative Verschiebung der Rastermarke 16 und der Umhüllung 12 zueinander zu verhindern. Selbst bei einer Verschiebung der Rastermarke 16 relativ zur Verbindungsnaht 15 oder umgekehrt läßt sich jedoch eine eindeutige Zuordnung herstellen bzw. Echtheit belegen, da sich die Breite der Überlappung a durch die Verschiebung nicht ändert und auch die Summe der Überstände b und c gleich bleibt.

Die Codierung 14 sowie die Meßgröße jeder Verpackung 10 werden vorzugsweise optisch erfaßt und elektronisch verarbeitet. Es sind jedoch auch alle anderen berührungslosen und/oder mechanischen Erfassungs,- Meß- und Verarbeitungsverfahren einsetzbar. Vorzugsweise wird der Bereich der Verbindungsnaht 15 mit der darunter befindlichen Rastermarke 16 mit einer entsprechenden Kamera oder dergleichen photographiert und vermessen. Aus den Meßwerten läßt sich dann die Meßgröße abc ermitteln.

Um eine Verpackung 10 nun auf Echtheit zu überprüfen, wird wieder die charakteristische Eigenschaft, in der gezeigten Ausführungsform also die Meßgröße abc, gemessen. Durch Abfrage, z.B. durch Telefonanruf, direkte Netzanbindung oder dergleichen, bei der Datenbank, die üblicherweise nur dem Hersteller zugänglich ist, wird die Zusammengehörigkeit der Meßgröße abc und der auf der Verpackung 10 befindlichen Codierung 14 verifiziert. Befindet sich in der Datenbank ein Datensatz, der vollständig mit dem Datensatz der geprüften Verpackung 10 übereinstimmt, kann mit hoher Sicherheit von der Echtheit der Verpackung 10 ausgegangen werden. Es kann auch abgefragt werden, welche Meßgröße abc zu einer vom Prüfer erfaßten oder automatisch ermittelten Codierung 14 gehört. Auch können sowohl die Codierung 14 als auch die Meßgröße erfaßt und als Datensatzabfrage gestartet werden. Die Abfrage kann also einfach, d.h. ohne irgendeine Vernetzung, z.B. durch einen Prüfer durchgeführt werden. Bei einer automatisierten Abfrage sind die einzelnen Komponenten, Mittel, Speicher und dergleichen der Einrichtung untereinander vernetzt.

Die Einrichtungen, mit denen die Verpackungen 10 gekennzeichnet und/oder identifiziert werden, bestehen aus handelsüblichen Komponenten, so daß auf eine detaillierte Beschreibung verzichtet wird. Wichtig ist, daß für die Kennzeichnung der Verpackungen 10 ein Mittel zum Erfassen mindestens einer für die Verpackung 10 charakteristischen Eigenschaft vorhanden ist. Dieses Mittel kann eine optische oder auch mechanische Einrichtung, z.B. eine Kamera sein. Zusätzlich ist ein Speichermedium zweckmäßig, um einerseits die zuvor aufbrachte Codierung und andererseits auch die ermittelte Meßgröße zu speichern. Als Speichermedium bietet sich eine Datenbank an, die über einen PC oder dergleichen ansteuerbar ist. Die einzelnen Mittel sowie die Datenbank und der PC sind miteinander vernetzt, um auch die Zuordnung der Codierung und Meßgröße gewährleisten zu können. Durch die Vernetzung läßt sich die Identifizierung sogar vollautomatisch durchführen. Zum Aufbringen der Codierung 14 kann die Einrichtung auch ein separates Mittel umfassen, das integraler Bestandteil der Einrichtung selbst ist.

Die Einrichtung zur Identifizierung der Verpackung ist ähnlich wie die gerade beschriebene Einrichtung aufgebaut und kann sogar mit dieser identisch sein. Zusätzlich weist die Einrichtung zweckmäßigerweise aber noch Mittel zum Erfassen der Codierung auf. Die Mittel zum Erfassen der Meßgröße und der Codierung können auch als eine Einheit ausgebildet bzw. sogar identisch sein.

## Patentansprüche

1. Verfahren zur Kennzeichnung einer insbesondere mit Zigaretten befüllten Verpackung (10), die ein Verpackungselement (11) zur Aufnahme des Verpackungsguts sowie eine das Verpackungselement (11) mindestens teilweise umschließende Umhüllung (12) umfaßt, **gekennzeichnet durch** folgende Schritte:
- während des Herstellungsprozesses der Verpackung (10) wird mindestens eine individuelle, lediglich einmal vergebene Codierung (14) auf das Verpackungselement (11) und/oder die Umhüllung (12) aufgebracht und in einem Speichermedium gespeichert,
- während des Herstellungsprozesses der Verpackung (10) wird des weiteren mindestens eine für das Verpackungselement (11) und/oder die Umhüllung (12) charakteristische Eigenschaft als Meßgröße erfaßt,
- die Meßgröße wird der dem Verpackungselement (11) und/oder der Umhüllung (12) zugehörigen Codierung (14) in dem Speichermedium zur Bildung eines einzigartigen Datensatzes zugeordnet.

2. Verfahren nach Anspruch 1, **dadurch gekennzeichnet, daß** die Codierung (14) gedruckt und/oder geprägt wird.

3. Verfahren nach Anspruch 1 oder 2, **dadurch gekennzeichnet, daß** die Codierung (14) erfaßt und dann im Speichermedium abgelegt wird.

4. Verfahren nach einem der Ansprüche 1 bis 3, **dadurch gekennzeichnet, daß** zusätzlich eine Rastermarke (16) auf das Verpackungselement (11) und/oder die Umhüllung (12) aufgebracht wird.

5. Verfahren nach Anspruch 4, **dadurch gekennzeichnet, daß** die Lage und Überlappungsbreite einer Verbindungsnaht (15) der Umhüllung (12) relativ zur Rastermarke (16) als Meßgröße ermittelt wird.

6. Verfahren nach einem der Ansprüche 1 bis 5, **dadurch gekennzeichnet, daß** die Codierung (14) und die Meßgröße optisch erfaßt und elektronisch verarbeitet werden.

7. Verfahren zur Identifizierung einer insbesondere mit Zigaretten befüllten Verpackung (10), die ein Verpackungselement (11) zur Aufnahme des Verpackungsguts sowie eine das Verpackungselement (11) mindestens teilweise umschließende Umhüllung (12) umfaßt, **gekennzeichnet durch** folgende Schritte:
- Erfassen mindestens einer auf dem Verpackungselement (11) und/oder der Umhüllung (12) aufgebrachten, individuellen und lediglich einmal vergebenen Codierung (14),
- Erfassen mindestens einer für das Verpackungselement (11) und/oder die Umhüllung (12) charakteristischen Eigenschaft als Meßgröße,
- Vergleich der erfaßten Codierung (14) und Meßgröße mit einem bei der Herstellung der Verpackung (10) n einem Speichermedium gespeicherten, aus Codierung (14) und Meßgröße gebildeten einzigartigen Datensatz zu jeder Verpackung (10).

8. Verfahren nach Anspruch 7, **dadurch gekennzeichnet, daß** die Lage und Überlappungsbreite einer Verbindungsnaht (15) der Umhüllung (12) relativ zu einer auf dem Verpackungselement (11) und/oder der Umhüllung (12) aufgebrachten Rastermarke (16) als Meßgröße ermittelt wird.

9. Verfahren nach Anspruch 7 oder 8, **dadurch gekennzeichnet, daß** die Codierung (14) und Meßgröße optisch erfaßt und elektronisch verarbeitet wird.

10. Einrichtung zur Kennzeichnung einer insbesondere mit Zigaretten befüllten Verpackung (10), die ein Verpackungselement (11) zur Aufnahme des Verpackungsguts sowie eine das Verpackungselement (11) mindestens teilweise umschließenden Umhüllung (12) umfaßt, **dadurch gekennzeichnet, daß** die Einrichtung Mittel zum Erfassen mindestens einer für das Verpackungselement (11) und/oder die Umhüllung (12) charakteristischen Eigenschaft als Meßgröße sowie ein Speichermedium zum Speichern der erfaßten Meßgröße umfaßt, wobei das Mittel und das Speichermedium über einen Personalcomputer (PC) oder dergleichen zum Zuordnen der Meßgröße zu einer im Speichermedium abgelegten, individuellen und lediglich einmal vergebenen Codierung (14) der Verpackung (10) miteinander verbunden sind.

11. Einrichtung nach Anspruch 10, **dadurch gekennzeichnet, daß** die Einrichtung Mittel zum Aufbringen der Codierung (14) aufweist.

12. Einrichtung zum Identifizieren einer insbesondere mit Zigaretten befüllten Verpackung (10), die ein Verpackungselement (11) zur Aufnahme des Verpackungsguts sowie eine das Verpackungselement (11) mindestens teilweise umschließenden Umhüllung (12) umfaßt, **dadurch gekennzeichnet, daß** die Einrichtung Mittel zum Erfassen mindestens einer für das Verpackungselement (11) und/oder die Umhüllung (12) charakteristischen Eigenschaft als Meßgröße sowie ein Speichermedium zum Speichern der erfaßten Meßgröße umfaßt, wobei das Mittel und das Speichermedium über einen Personalcomputer (PC) oder dergleichen zum Vergleichen einer individuellen und lediglich einmal vergebenen Codierung (14) und der erfaßten Meßgröße der zu identifizierenden Verpackung (10) mit einem zuvor im Speichermedium gespeicherten, aus Codierung (14) und Meßgröße gebildeten, einzigartigen Datensatz zu jeder Verpackung (10) miteinander verbunden sind.

13. Verpackung, insbesondere Zigarettenverpackung, mit einem Verpackungselement (11) zur Aufnahme von z.B. Zigaretten, wobei das Verpackungselement (11) mit einer dünnen, vorzugsweise folienartigen Umhüllung (12) versehen ist, **dadurch gekennzeichnet, daß** auf dem Verpackungselement (11) und/oder der Umhüllung (12) eine von außen lesbare individuelle, lediglich einmal vergebene Codierung (14) aufgebracht ist und zusätzlich eine Rastermarke (16) oder dergleichen zur Erfassung einer charakteristischen Eigenschaft des Verpackungselementes (11) und/oder der Umhüllung (12) als Meßgröße vorgesehen ist.

14. Verpackung nach Anspruch 13, **dadurch gekennzeichnet, daß** die Rastermarke (16) auf dem Verpackungselement (11) angeordnet ist.

15. Verpackung nach Anspruch 13, **dadurch gekennzeichnet, daß** die Rastermarke (16) auf der Umhüllung (12) angeordnet ist.

16. Verpackung nach einem der Ansprüche 13 bis 15, **dadurch gekennzeichnet, daß** die Rastermarke (16) im Bereich einer Verbindungsnaht (15) der Umhüllung (12) angeordnet ist.

17. Verpackung nach einem der Ansprüche 13 bis 16, **dadurch gekennzeichnet, daß** die Rastermarke (16) ortsfest am Verpackungselement (11) und/oder an der Umhüllung (12) befestigt ist.

18. Verpackung nach einem der Ansprüche 13 bis 17, **dadurch gekennzeichnet, daß** die Rastermarke (16) relativ zu der zu erfassenden charakteristischen Eigenschaft ortsfest befestigt ist.

19. Verpackung nach einem der Ansprüche 13 bis 18, **dadurch gekennzeichnet, daß** die Rastermarke (16) aus einer ohnehin auf der Verpackung (10) befindlichen Bedruckung, Prägung oder dergleichen gebildet ist.
